# EUROPÄISCHE PATENTSCHRIFT

(11) **EP 3 486 452 B1**
(45) Veröffentlichungstag und Bekanntmachung des Hinweises auf die Patenterteilung: **19.08.2020**
(21) Anmeldenummer: 17202058.8
(22) Anmeldetag: 16.11.2017
(51) Int. Cl.: F02B 39/16, F02D 29/06, F02D 41/02, F02B 37/16, F02B 37/18, F02D 23/00, F02D 41/00

(54) **BRENNKRAFTMASCHINE**
COMBUSTION ENGINE
MOTEUR À COMBUSTION INTERNE

(43) Veröffentlichungstag der Anmeldung: 22.05.2019
(73) Patentinhaber: Innio Jenbacher GmbH & Co OG, 6200 Jenbach (AT)
(72) Erfinder: SPYRA, Nikolaus, 6200 Jenbach 7 - Tirol (AT); VOGL, Lukas, 6200 Jenbach 7 - Tirol (AT); LOPEZ, Francisco, 6200 Jenbach 7 - Tirol (AT)
(74) Vertreter: Torggler & Hofinger Patentanwälte

(56) Entgegenhaltungen:
- EP-A2- 0 685 652
- EP-A2- 2 860 377
- WO-A1-2011/088483
- DE-A1- 10 007 669
- DE-A1- 10 043 760
- DE-A1-102007 051 845

## Beschreibung

Die vorliegende Erfindung betrifft eine Brennkraftmaschine mit den Merkmalen des Oberbegriffs des Anspruchs 1 und ein Genset mit einer solchen Brennkraftmaschine.

Turbolader werden seit langem eingesetzt, um Luft, ein Kraftstoff-Luft-Gemisch oder reinen Kraftstoff vor der Zufuhr zu den Brennraumen der Brennkraftmaschine auf ein höheres Druckniveau zu verdichten.

Die Pumpgrenze des Verdichters des Turboladers kennzeichnet jene Grenze, bei welcher es im Falle einer Überschreitung zu einem instabilen Betrieb, z. B. einer Strömungsumkehr, durch den Verdichter kommt.

Die Stopfgrenze des Verdichters des Turboladers kennzeichnet jene Grenze, bei welcher es im Falle eines Erreichens zu keinem Massenstrom durch den Verdichter mehr kommt. Im Rahmen des vorliegenden Dokuments ist "Stopfgrenze" gleichbedeutend mit "Stoffgrenze".

Externe wie interne Einflüsse können dazu fuhren, dass sich die Position des Betriebspunkts des Verdichters verändert und sogar die Pumpgrenze erreicht oder überschritten wird. Auch eine Alterung des Turboladers kann zu einem solchen Verhalten fuhren.

Ist die Brennkraftmaschine mit einem Generator zu einem Genset gekoppelt, ist ein wichtiges Beispiel für einen externen Einfluss ein Netzfehler in einem mit dem Genset verbundenen Energieversorgungsnetz. Dabei kann es sich z. B. um einen Kurzschluss in wenigstens einer Phase des Energieversorgungsnetzes handeln. Es kommt zu einer Unterspannung und einem Überstrom was in Bezug auf das Genset starke und schnelle Laständerungen verursacht. Verschiedene nationale Rechtsordnungen schreiben vor, dass das Genset bei Vorliegen eines Netzfehlers zumindest für eine gewisse Zeit mit dem Energieversorgungsnetz verbunden bleiben muss (engl. "low voltage ride through" - LVRT). Ohne Schutzmassnahmen kann es zu nachteiligen Auswirkungen auf das Genset kommen.

Beispiele für interne Einflüsse sind ein Schaden am Turbolader, Zündaussetzer in Bezug auf zumindest einen Brennraum der Brennkraftmaschine, usw.

Verschiedene Maßnahmen, die das Überschreiten der Pumpgrenze verhindern sollen, sind im Stand der Technik bekannt (DE 10 2007 051845 A1, DE 100 43 760 A1, DE 100 07 669 A1, WO 2004/038229 A1, DE 43 16 202 A1).

Es sind ebenfalls gewisse Maßnahmen bekannt, die das Überschreiten der Pumpgrenze bei einer mit einem Generator verbundenen Brennkraftmaschine (Genset) verhindern, wenn ein Netzfehler auftritt (EP 2 860 377 A2, WO 2011/088483 A1).

Aufgabe der Erfindung ist die Bereitstellung einer Brennkraftmaschine, welche auch bei Vorliegen von Einflüssen, welche im Stand der Technik ein Erreichen oder Überschreiten der Pumpgrenze des Verdichters bewirken, einen stabilen Betrieb des Turboladers gestattet und eines Gensets mit einer solchen Brennkraftmaschine.

Diese Aufgabe wird durch eine Brennkraftmaschine mit den Merkmalen des Anspruchs 1 und ein Genset mit einer solchen Brennkraftmaschine gelost. Vorteilhafte Ausführungsformen der Erfindung sind in den abhängigen Ansprüchen definiert.

Dadurch, dass die Regel- oder Steuereinrichtung dazu ausgebildet ist, das zumindest eine Stellglied so zu regeln oder zu steuern, dass ein Erreichen der Pumpgrenze durch den Betriebspunkt des wenigstens einen Verdichters verhindert wird, ist ein stabiler Betrieb des Turboladers auch bei Vorliegen von negativen externen oder internen Einflüssen möglich.

Bei der Regel- oder Steuereinrichtung kann es sich beispielsweise um eine zentrale Regel- oder Steuereinrichtung der Brennkraftmaschine handeln.

Die möglichen Positionen des Betriebspunktes im Verdichter Kennfeld sind natürlich durch die maximalen mechanischen Grenzen des Turboladers beschränkt.

Bevorzugt ist vorgesehen, dass die zumindest zwei Betriebsgrössen des Turboladers, welche durch die Messeinrichtung gemessen werden, ausgewählt sind aus:
- Druckverhältnis über den Verdichter
- Volumen- oder Massenstrom durch den Verdichter
- Drehzahl des Turboladers
oder aus diesen Grössen abgeleitete Grössen.

Bevorzugt ist vorgesehen, dass das zumindest eine Stellglied als Umblaseventil, Wastegate, variabler Ventiltrieb, Drosselklappe, Einblaseventil für Luft oder Gemisch nach dem Verdichter, als variable Turbinengeometrie Umblaseventil, Wastegate, variabler Ventiltrieb, Drosselklappe, Einblaseventil für Luft oder Gemisch nach dem

Verdichter, als variable Turbinengeometrie, als Stellglied zur Beeinflussung des Zeitpunktes der Zündung oder für das Abschalten von Zündvorrichtungen für die Brennraume oder als Stellglied zur Beeinflussung der Menge oder Zeitpunktes der Einbringung von flüssigem oder gasförmigen Kraftstoff in die Brennraume ausgebildet ist.

Bevorzugt ist vorgesehen, dass die Regel- oder Steuereinrichtung dazu ausgebildet ist, bei einem durch externe Einflüsse verursachtes Wandern des Betriebspunktes ein Erreichen der Pumpgrenze durch den Betriebspunkt zu verhindern.

Erfindungsgemäß ist eine Signalvorrichtung vorgesehen, welche mit einem Energieversorgungsnetz in Verbindung bringbar ist und dazu ausgebildet ist, bei Detektion eines Netzfehlers des Energieversorgungsnetzes ein Signal an die Regel oder Steuereinrichtung, wobei die Regel- oder Steuereinrichtung dazu ausgebildet ist, bei Erhalt eines solchen Signals eine Ansteuerung des zumindest einen Stellglieds so vorzunehmen, dass ein durch Massnahmen der Regel- oder Steuereinrichtung, welche der Handhabung des Netzfehlers dienen (allgemein: Reduktion der Leistung der Brennkraftmaschine, z. B. Aussetzung der Zündung oder Stellen der Zündung auf spat), bedingtes Erreichen der Pumpgrenze durch den Betriebspunkt verhindert wird.

Dies bringt eine Reihe von Vorteilen mit sich:
- Die Wahrscheinlichkeit eines Erreichens oder Überschreitens der Pumpgrenze während des LVRT ist reduziert.
- Es werden die negativen Auswirkungen eines Netzfehlers während eines LVRT hinsichtlich des Turboladers verringert.
- Es sind längere Dauern des LVRT möglich.
- Während des LVRT kommt es zu einem geringeren Leistungseinbruch der Brennkraftmaschine, weil die Funktionsfähigkeit des Turboladers weniger beeinträchtigt wird.
- Es können Generatoren mit einem niedrigeren Trägheitsmoment eingesetzt werden, als dies bisher möglich war.

Bevorzugt ist vorgesehen, dass die Regel- oder Steuereinrichtung dazu ausgebildet ist, bei einem durch einen internen Einfluss (z. B. ein Schaden am Turbolader, Zündaussetzer in Bezug auf zumindest einen Brennraum der Brennkraftmaschine) verursachtes Wandern des Betriebspunktes ein Erreichen der Pumpgrenze durch den Betriebspunkt zu verhindern.

Bevorzugt ist vorgesehen, dass die Regel- oder Steuereinrichtung dazu ausgebildet ist, bei einem durch Alterung des Verdichters verursachtes Wandern des Betriebspunktes ein Erreichen der Pumpgrenze durch den Betriebspunkt zu verhindern.

Bevorzugt ist vorgesehen, dass die Regel- oder Steuereinrichtung dazu ausgebildet ist, über das zumindest eine Stellglied ein Wandern des Betriebspunktes auf einem vorgegebenen Pfad im Verdichterkennfeld zu bewirken.

Dabei kann vorgesehen sein, dass die Regel- oder Steuereinrichtung dazu ausgebildet ist, über das zumindest eine Stellglied ein Wandern des Betriebspunktes auf einem vorgegebenen Pfad im Verdichterkennfeld wenigstens annähernd parallel zur Pumpgrenze zu bewirken. Je näher an der Pumpgrenze der Betriebspunkt verbleibt, desto geringer ist der Leistungseinbruch des Turboladers und damit der Brennkraftmaschine, weil der Ladedruck der Luft, des Kraftstoff-Luft-Gemisches oder des reinen Kraftstoffes (je nach Bauform der Brennkraftmaschine, z. B. Gasmotor mit Gemischaufladung, Gasmotor mit Port-Injection, Brennkraftmaschine mit Einspritzung von flüssigem Kraftstoff, Dual-Fuel-Brennkraftmaschine) weniger stark abfällt.

Es kann vorgesehen sein, dass die Regel- oder Steuereinrichtung dazu ausgebildet ist, über das zumindest eine Stellglied ein Wandern des Betriebspunktes auf einem vorgegebenen Pfad innerhalb eines Korridors der - vorzugsweise über einen Sicherheitsbereich - der Pumpgrenze vorgelagert ist zu bewirken.

Bevorzugt ist vorgesehen, dass die Regel- oder Steuereinrichtung dazu ausgebildet ist, die Ansteuerung des zumindest einen Stellglieds in Abhängigkeit eines Verdichtermodells zu berechnen. Die Art der Berechnung ist z. B. in folgenden Lehrbüchern gelehrt:
- Hermann Hiereth, Peter Prenninger Aufladung der Verbrennungskraftmaschine - Der Fahrzeugantrieb / Chapter 5 2003 Springer - Verlag / Wien
- Gunther P. Merker, Rudiger Teichmann Grundlagen Verbrennungsmotoren (Funktionsweise - Simulation - Messtechnik) / Chapter 5 (Aufladesysteme), 7., vollständig überarbeitete Auflage 2014 Springer - Verlag / Wien
- Gunther P. Merker, Christian Schwarz Grundlagen Verbrennungsmotoren (Simulation der Gemischbildung, Verbrennung, Schadstoffbildung und Aufladung) / Chapter 8 (Aufladung von Verbrennungsmotoren) 4., überarbeitete und aktualisierte Auflage Vieweg + Teubner, GWV Fachverlage GmbH, Wiesbaden 2009
Bevorzugt ist vorgesehen, dass die Regel- oder Steuereinrichtung dazu ausgebildet ist, die Ansteuerung des zumindest einen Stellglieds in Abhängigkeit einer hinterlegten Tabelle vorzunehmen. Die Tabelle kann auf Erfahrungswerten basieren oder auf einem Prüfstand erstellt werden.

Die Erfindung kann bevorzugt bei einer stationären Brennkraftmaschine, für Marineanwendungen oder mobile Anwendungen wie sogenannte "Non-Road-Mobile-Machinery" (NRMM) - vorzugsweise jeweils als Hubkolbenmaschine ausgebildet - eingesetzt werden. Die Brennkraftmaschine kann, nicht erfindungsgemäß, als mechanischer

Antrieb dienen, z. B. zum Betreiben von Verdichteranlagen oder kann erfindungsgemäß mit einem Generator zu einem Genset zur Erzeugung elektrischer Energie gekoppelt sein. Die Brennkraftmaschine weist bevorzugt eine Vielzahl von Brennräumen auf.

Ausführungsbeispiele der Erfindung werden anhand der Figuren diskutiert. Es zeigen:
Fig. 1 eine schematische Darstellung einer erfindungsgemäßen Brennkraftmaschine
Fig. 2 ein Verdichterkennfeld eines Turboladers einer erfindungsgemäßen Brennkraftmaschine.

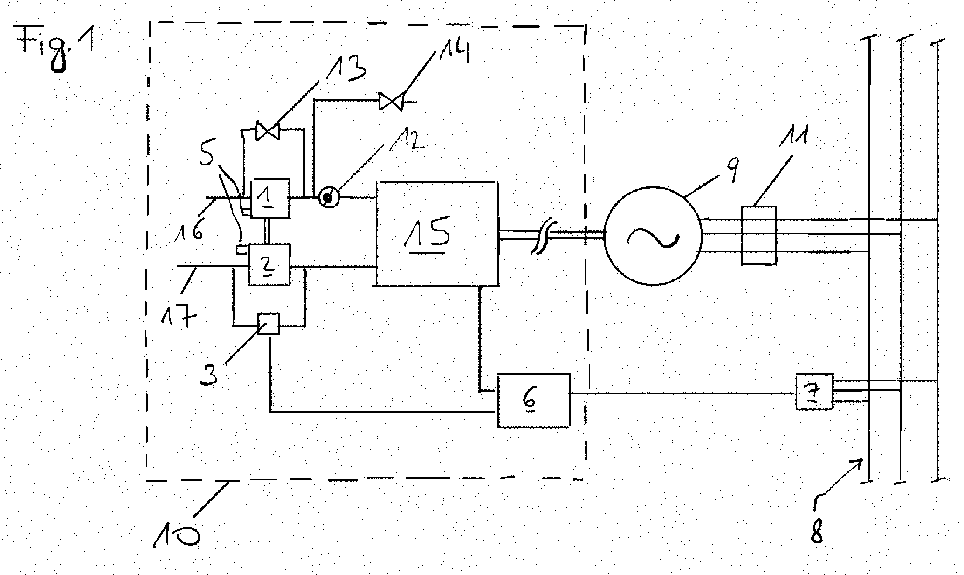

Fig. 1 zeigt eine Brennkraftmaschine 10 mit einer nur schematisch dargestellten Vielzahl 15 von Brennräumen (ggf. mit Vorkammern verbunden) mit nicht dargestellten Kraftstoffzufuhreinrichtungen zu den einzelnen Brennraumen (z. B. Einlassventile oder aktive Gasventile, Port-Injection-Ventile, Injektoren für flüssigen Kraftstoff usw.), einem Turbolader, welcher einen Verdichter 1 und eine Abgasturbine 2 aufweist, usw. Gezeigt sind ein Einlasstrakt 16 und ein Auslasstrakt 17 für Luft oder ein Kraftstoff-Luft-Gemisch.

Es sind exemplarisch Stellglieder zum Einstellen eines Betriebspunktes 4 des Turboladers im Verdichterkennfeld gezeigt, nämlich eine Drosselklappe 12, ein Umblaseventil 13, ein Einblaseventil 14 und ein Wastegate 3. Weitere Stellglieder können in Bezug auf die Vielzahl 15 von Brennraumen vorgesehen sein (z. B. Stellglieder zur Beeinflussung des Zeitpunktes der Zündung oder für das Abschalten von Zündvorrichtungen für die Brennraume, Stellglieder zur Beeinflussung der Menge oder Zeitpunktes der Einbringung von flüssigem oder gasförmigen Kraftstoff in die Brennraume).

Es ist eine Messeinrichtung 5 zur Messung zumindest zweier Betriebsgrössen des Turboladers (hier: Druckverhältnis über den Verdichter 1, Volumen- oder Massenstrom durch den Verdichter 1 oder Drehzahl des Turboladers) vorgesehen, mittels welcher eine Lage eines Betriebspunkts 4 des Turboladers im Verdichterkennfeld bestimmbar ist.

Eine Regel- oder Steuereinrichtung 6 ist mit der Messeinrichtung 5 verbunden (die Verbindungen sind nicht dargestellt) und zur Ansteuerung der Stellglieder 3 ausgebildet. Die Regel- oder Steuereinrichtung 6 ist hier als zentrale Regel- oder Steuereinrichtung der gesamten Brennkraftmaschine 10 ausgebildet und kann auch Messgrössen von der Vielzahl 15 von Brennraumen (samt der ihr zugeordneten Komponenten wie aktive Gasventile, Druck in Versorgungsleitungen usw.) erhalten sowie Befehle an die Vielzahl 15 von Brennräumen bzw. der ihr zugeordneten Komponenten geben.

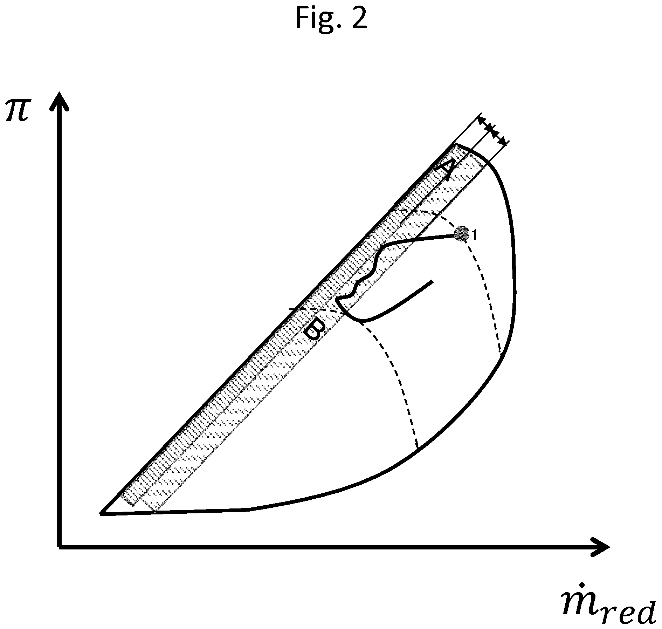

Die Brennkraftmaschine 10 ist zur Stromerzeugung mechanisch (über eine Welle) mit einem Generator 9 zu einem Genset verbunden und steht mit einem dreiphasigen Energieversorgungsnetz 8 elektrisch in Verbindung. Es ist eine Signalvorrichtung 7 vorgesehen, welche mit dem Energieversorgungsnetz 8 verbunden oder in Verbindung bringbar ist und dazu ausgebildet ist, bei Detektion eines Netzfehlers des Energieversorgungsnetzes 8 ein Signal an die Regel- oder Steuereinrichtung 6 zu übermitteln, wobei die Regel- oder Steuereinrichtung 6 dazu ausgebildet ist, bei Erhalt eines solchen Signals eine Ansteuerung des zumindest einen Stellglieds so vorzunehmen, dass ein durch Massnahmen, welche der Handhabung des Netzfehlers - insbesondere in Bezug auf das LVRT - dienen (allgemein: Reduktion der Leistung der Brennkraftmaschine, z. B. Aussetzung der Zündung oder Stellen der Zündung auf spät), bedingtes Erreichen der Pumpgrenze durch den Betriebspunkt verhindert wird (vgl. die Ausführungen zu Fig. 2).

Fig. 2 zeigt ein Verdichterkennfeld des Verdichters 1 des Turboladers (Ordinate: Druckverhältnis π über Verdichter 1, Abszisse: temperatur- und druckkompensierter Massenstrom m.red), wobei erkennbar ist, dass der Verdichter 1 in einem stabilen Betriebsbereich stabil betreibbar ist, welcher stabile Betriebsbereich einerseits durch eine Pumpgrenze P und andererseits durch eine Stopfgrenze S begrenzt ist. Die gestrichelten Linien zeigen isoreduzierte Drehzahllinien (d. h. um die Eingangstemperatur kompensierte Drehzahlen des Turboladers). Anders als dargestellt, kann auf der Ordinate auch der temperatur- und druckkompensierte Volumenstrom aufgetragen sein.

Der Betriebspunkt 4 ist in einer Position eingezeichnet, welche bei einem stabilen Betrieb vor Eintreten eines Netzfehlers vorliegt. Nicht dargestellt sind geringfügige Bewegungen des Betriebspunktes 4 um die stabile Position herum, welche auch bei einem stabilen Betrieb des Turboladers auftreten können.

Detektiert die Signalvorrichtung 7 einen Netzfehler des Energieversorgungsnetzes 8, meldet sie dies der Regel- oder Steuereinrichtung 6. Die Regel- oder Steuereinrichtung 6 ist dazu ausgebildet, die Stellglieder so zu regeln oder zu steuern, dass ein Erreichen der Pumpgrenze P durch den Betriebspunkt 4 des

Verdichters 1 des wenigstens einen Turboladers trotz der Massnahmen, welche die Regel- oder Steuereinrichtung 6 für die Handhabung des Netzfehlers und insbesondere in Bezug auf das LVRT trifft, verhindert wird.

Erreicht der Betriebspunkt 4 den Korridor B, bewirkt die Regel- oder Steuereinrichtung 6 über die Stellglieder ein Wandern des Betriebspunktes 4 auf einem vorgegebenen Pfad innerhalb des Korridors B der über einen Sicherheitsbereich A der Pumpgrenze P vorgelagert ist. Der Korridor B und damit der Pfad verlaufen wenigstens annähernd parallel zur Pumpgrenze P. Ist der Netzfehler beendet, kehrt der Betriebspunkt 4 zu seiner ursprünglichen Position im Verdichterkennfeld zurück.

Der Sicherheitsbereich A ist so gewählt, dass zwar einerseits ein sicherer Abstand zur Pumpgrenze P gewahrt bleibt und aber andererseits nicht mehr Ladedruck als notwendig abgebaut wird, sodass nach dem Netzfehler wieder ein ausreichender Ladedruck zur Verfügung steht.

Dauert der Netzfehler zu lange an (z. B. Überschreiten der sogenannten "clearing time"), kann die Verbindung zwischen dem Genset und Energieversorgungsnetz 8 durch einen Netzschalter 11 getrennt werden.

### Bezugszeichenliste:

- 1: Verdichter des Turboladers
- 2: Abgasturbine des Turboladers
- 3: Wastegate
- 4: Betriebspunkt des Turboladers im Verdichterkennfeld
- 5: Messeinrichtung zur Messung zumindest zweier Betriebsgrössen des Turboladers
- 6: Regel- oder Steuereinrichtung
- 7: mit dem Energieversorgungsnetz verbundene Signalvorrichtung
- 8: Energieversorgungsnetz
- 9: Generator
- 10: Brennkraftmaschine
- 11: Netzschalter
- 12: Drosselklappe
- 13: Umblaseventil
- 14: Einblaseventil
- 15: Vielzahl von Brennraumen
- 16: Einlasstrakt
- 17: Abgastrakt

## Patentansprüche

1. Brennkraftmaschine (10) mit:
- wenigstens einem Turbolader, welcher einen Verdichter (1) und eine Abgasturbine (2) aufweist und welcher in einem stabilen Betriebsbereich eines Verdichterkennfelds des wenigstens einen Verdichters (1) stabil betreibbar ist, welcher stabile Betriebsbereich einerseits durch eine Pumpgrenze (P) und andererseits durch eine Stopfgrenze (S) begrenzt ist,
- zumindest einem Stellglied zum Einstellen eines Betriebspunktes (4) des wenigstens einen Verdichters (1) im Verdichterkennfeld,
- eine Messeinrichtung (5) zur Messung zumindest zweier Betriebsgrößen des Turboladers, mittels welcher eine Lage eines Betriebspunkts (4) des wenigstens einen Verdichters (1) im Verdichterkennfeld bestimmbar ist, sowie
- eine Regel- oder Steuereinrichtung (6), welche mit der Messeinrichtung (5) verbunden ist und zur Ansteuerung des zumindest einen Stellglieds ausgebildet ist,
wobei die Regel- oder Steuereinrichtung (6) dazu
ausgebildet ist, das zumindest eine Stellglied so zu regeln oder zu steuern, dass ein Erreichen der Pumpgrenze (P) durch den Betriebspunkt (4) des wenigstens einen Verdichters (1) verhindert wird, und wobei eine Signalvorrichtung (7) vorgesehen ist, welche mit einem Energieversorgungsnetz (8) verbunden oder in Verbindung bringbar ist und dazu ausgebildet ist, bei Detektion eines Netzfehlers des Energieversorgungsnetzes (8) ein Signal an die Regel- oder Steuereinrichtung (6) zu übermitteln, **dadurch gekennzeichnet, dass** die Regel- oder Steuereinrichtung (6) dazu ausgebildet ist, bei Erhalt eines solchen Signals eine Ansteuerung des zumindest einen Stellglieds so vorzunehmen, dass ein durch Maßnahmen der Regel- oder Steuereinrichtung (6), welche der Handhabung des Netzfehlers dienen, bedingtes Erreichen der Pumpgrenze (P) durch den Betriebspunkt (4) verhindert wird.

2. Brennkraftmaschine nach Anspruch 1, wobei die zumindest zwei Betriebsgrößen des Turboladers ausgewählt sind aus:
- Druckverhältnis über den Verdichter (1)
- Volumen- oder Massenstrom durch den Verdichter (1)
- Drehzahl des Turboladers
oder aus diesen Größen abgeleitete Größen.

3. Brennkraftmaschine nach wenigstens einem der vorangehenden Ansprüche, wobei das zumindest eine Stellglied als Umblaseventil (13), Wastegate (3), variabler Ventiltrieb, Drosselklappe (12), Einblaseventil (14) für Luft oder Gemisch nach dem Verdichter (1), als variable Turbinengeometrie, Stellglied zur Beeinflussung des Zeitpunktes der Zündung oder für das Abschalten von Zündvorrichtungen für die Brennräume oder als Stellglied zur Beeinflussung der Menge oder Zeitpunktes der Einbringung von flüssigem oder gasförmigen Kraftstoff in die Brennräume ausgebildet ist.

4. Brennkraftmaschine nach wenigstens einem der vorangehenden Ansprüche, wobei die Regel- oder Steuereinrichtung (6) dazu ausgebildet ist, bei einem durch externe Einflüsse verursachtes Wandern des Betriebspunktes (4) ein Erreichen der Pumpgrenze (P) durch den Betriebspunkt (4) zu verhindern.

5. Brennkraftmaschine nach wenigstens einem der vorangehenden Ansprüche, wobei die Regel- oder Steuereinrichtung (6) dazu ausgebildet ist, bei einem durch einen internen Einfluss verursachtes Wandern des Betriebspunktes (4) ein Erreichen der Pumpgrenze (P) durch den Betriebspunkt (4) zu verhindern.

6. Brennkraftmaschine nach wenigstens einem der vorangehenden Ansprüche, wobei die Regel- oder Steuereinrichtung (6) dazu ausgebildet ist, bei einem durch Alterung des Verdichters (1) verursachtes Wandern des Betriebspunktes (4) ein Erreichen der Pumpgrenze (P) durch den Betriebspunkt (4) zu verhindern.

7. Brennkraftmaschine nach wenigstens einem der vorangehenden Ansprüche, wobei die Regel- oder Steuereinrichtung (6) dazu ausgebildet ist, über das zumindest eine Stellglied ein Wandern des Betriebspunktes (4) auf einem vorgegebenen Pfad im Verdichterkennfeld zu bewirken.

8. Brennkraftmaschine nach dem vorangehenden Anspruch, wobei die Regel- oder Steuereinrichtung (6) dazu ausgebildet ist, über das zumindest eine Stellglied ein Wandern des Betriebspunktes (4) auf einem vorgegebenen Pfad im Verdichterkennfeld wenigstens annähernd parallel zur Pumpgrenze (P) zu bewirken.

9. Brennkraftmaschine nach wenigstens einem der beiden vorangehenden Ansprüche, wobei die Regel- oder Steuereinrichtung (6) dazu ausgebildet ist, über das zumindest eine Stellglied ein Wandern des Betriebspunktes (4) auf einem vorgegebenen Pfad innerhalb eines Korridors (B) der - vorzugsweise über einen Sicherheitsbereich (A) - der Pumpgrenze (P) vorgelagert ist, zu bewirken.

10. Brennkraftmaschine nach wenigstens einem der vorangehenden Ansprüche, wobei die Regel- oder Steuereinrichtung (6) dazu ausgebildet ist, die Ansteuerung des zumindest einen Stellglieds in Abhängigkeit eines Verdichtermodells zu berechnen.

11. Brennkraftmaschine nach wenigstens einem der vorangehenden Ansprüche, wobei die Regel- oder Steuereinrichtung (6) dazu ausgebildet ist, die Ansteuerung des zumindest einen Stellglieds in Abhängigkeit einer hinterlegten Tabelle vorzunehmen.

12. Genset mit einem Generator (9) und einer mechanisch mit dem Generator (9) gekoppelten Brennkraftmaschine (1) nach wenigstens einem der vorangehenden Ansprüche.

## Claims

1. Internal combustion engine (10) with:
- at least one turbocharger which has a compressor (1) and an exhaust turbine (2), and which can be stably operated in a stable operating range of a compressor map of the at least one compressor (1), which stable operating range is limited by a surge line (P) on the one hand, and by a choke line (S) on the other hand
- at least one actuator for setting an operating point (4) of the at least one compressor (1) in the compressor map
- a measuring device (5) for measuring at least two operating parameters of the turbocharger, by means of which a position of an operating point (4) of the at least one compressor (1) is determinable in the compressor map
- a closed loop or open loop control device (6) which is connected to the measuring device (5), and is designed to activate the at least one actuator
wherein the closed loop or open loop control device (6) is designed in a way to regulate or control the at least one actuator in such a way that reaching the surge line (P) by the operating point (4) of the at least one compressor (1) is prevented and wherein a signalling device (7) is provided, which is connected to or connectable to an energy supply net (8), and is designed to transmit a signal to the closed loop or open loop control device (6) when a net fault of the energy supply net (8) is detected, wherein the closed loop or open loop control device (6) is designed, upon receiving such a signal, to activate the at least one actuator in such a way that reaching the surge line (P) by the operating point (4) caused by measures of the closed loop or open loop control device(6), which serve to handle the net fault, is prevented..

2. Internal combustion engine according to claim 1, wherein the at least two operating parameters of the turbocharger are selected from:
- pressure ratio across the compressor (1)
- volume flow or mass flow through the compressor (1)
- rotational speed of the turbocharger
or parameters derived from these parameters.

3. Internal combustion engine according to at least one of the preceding claims, wherein the at least one actuator is designed as a bypass valve (13), wastegate (3), variable valve train, throttle valve (12), inlet valve (14) for air or mixture downstream of the compressor (1), as variable turbine geometry, actuator for influencing the point of time of the ignition or for the shutdown of ignition devices for the combustion chambers, or as an actuator for influencing the quantity or point of time of injecting liquid or gaseous fuel in the combustion chambers.

4. Internal combustion engine according to at least one of the preceding claims, wherein the closed loop or open loop control device (6) is designed so as to prevent reaching the surge line (P) by the operating point (4) when the operating point (4) moves caused by external influences.

5. Internal combustion engine according to at least one of the preceding claims, wherein the closed loop or open loop control device (6) is designed to prevent the surge line (P) from being reached by the operating point (4) when the operating point (4) moves caused by an internal influence.

6. Internal combustion engine according to at least one of the preceding claims, wherein the closed loop or open loop control device (6) is designed to prevent the surge line (P) from being reached by the operating point (4) when the operating point (4) moves caused by ageing of the compressor (1).

7. Internal combustion engine according to at least one of the preceding claims, wherein the closed loop or open loop control device (6) is designed to cause the operating point (4) to move along a predetermined path in the compressor map via the at least one actuator.

8. Internal combustion engine according to the preceding claim, wherein the closed loop or open loop control device (6) is designed to cause the operating point (4) to move along a predetermined path in the compressor map at least approximately parallel to the surge line (P) via the at least one actuator.

9. Internal combustion engine according to at least one of the two preceding claims, wherein the closed loop or open loop control device (6) is designed to cause the operating point (4) to move along a predetermined path within a corridor (B), which, preferably over a safety zone (A), is located in front of the surge line (P) via the at least one actuator.

10. Internal combustion engine according to at least one of the preceding claims, wherein the closed loop or open loop control device (6) is designed to calculate the activation of the at least one actuator in dependence on a compressor model.

11. Internal combustion engine according to at least one of the preceding claims, wherein the closed loop or open loop control device (6) is designed to activate the at least one actuator in dependence on a pre-defined table.

12. Genset comprising a generator (9) and an internal combustion engine (1) mechanically coupled to the generator (9) according to at least one of the preceding claims.

## Revendications

1. Moteur à combustion interne (10) avec :
- au moins un turbocompresseur, lequel présente un compresseur (1) et une turbine de gaz d'échappement (2) et lequel peut fonctionner de façon stable dans une zone de fonctionnement stable d'un diagramme caractéristique de compresseur du au moins un compresseur (1), laquelle zone de fonctionnement stable est limitée, d'une part, par une hauteur maximale d'aspiration (P) et, d'autre part, par une limite de remplissage (S),
- au moins un vérin pour régler un point de fonctionnement (4) du au moins un compresseur (1) dans le diagramme caractéristique de compresseur,
- un dispositif de mesure (5) destiné à mesurer au moins deux grandeurs de fonctionnement du turbocompresseur, au moyen desquelles peut être déterminée une position d'un point de fonctionnement (4) du au moins un compresseur (1) dans le diagramme caractéristique de compresseur, ainsi
- qu'un dispositif de réglage ou de commande (6), lequel est relié au dispositif de mesure (5) et est conçu pour la commande du au moins un vérin,
dans lequel le dispositif de réglage ou de commande (6) est conçu pour qu'au moins un vérin soit à régler et à commander de sorte que l'atteinte de la hauteur maximale d'aspiration (P) par le point de fonctionnement (4) du au moins un compresseur (1) soit empêchée, et dans lequel un dispositif de signal (7) est prévu, lequel est relié ou peut être mis en relation avec un réseau d'alimentation en énergie (8) et est conçu pour transmettre un signal au dispositif de réglage ou de commande (6) lors de la détection d'une erreur de réseau du réseau d'alimentation en énergie (8), **caractérisé en ce que** le dispositif de réglage ou de commande (6) est conçu pour qu'à l'obtention d'un tel signal, une commande du au moins un vérin soit effectuée de sorte que l'atteinte de la hauteur maximale d'aspiration (P) par le point de fonctionnement (4), conditionnée par des mesures du dispositif de réglage ou de commande (6), lesquelles servent à la gestion de l'erreur de réseau, est empêchée.

2. Moteur à combustion interne selon la revendication 1, dans lequel les au moins deux grandeurs de fonctionnement du turbocompresseur sont sélectionnées à partir :
- du rapport de pression sur le compresseur (1)
- du débit volumique ou massique par le compresseur (1)
- de la vitesse de rotation du turbocompresseur
ou à partir des grandeurs dérivées de ces grandeurs.

3. Moteur à combustion interne selon au moins l'une des revendications précédentes, dans lequel le au moins un vérin est conçu comme une soupape d'évacuation (13), une soupape de décharge (3), une soupape de distribution variable, une soupape d'étranglement (12), une vanne d'injection (14) pour l'air ou un mélange selon le compresseur (1), comme géométrie de turbine variable, vérin pour influencer le moment de l'allumage ou pour la mise hors circuit de dispositifs d'allumage pour les chambres de combustion ou comme vérin pour influencer la quantité ou le moment de l'introduction de carburant liquide ou gazeux dans les chambres de combustion.

4. Moteur à combustion interne selon au moins l'une des revendications précédentes, dans lequel le dispositif de réglage ou de commande (6) est conçu pour empêcher une atteinte de la hauteur maximale d'aspiration (P) par le point de fonctionnement (4) lors d'une migration du point de fonctionnement (4) provoquée par des influences externes.

5. Moteur à combustion interne selon au moins l'une des revendications précédentes, dans lequel le dispositif de réglage ou de commande (6) est conçu pour empêcher une atteinte de la hauteur maximale d'aspiration (P) par le point de fonctionnement (4) lors d'une migration du point de fonctionnement (4) provoquée par une influence interne.

6. Moteur à combustion interne selon au moins l'une des revendications précédentes, dans lequel le dispositif de réglage ou de commande (6) est conçu pour empêcher une atteinte de la hauteur maximale d'aspiration (P) par le point de fonctionnement (4) lors d'une migration du point de fonctionnement (4) provoquée par le vieillissement du compresseur (1).

7. Moteur à combustion interne selon au moins l'une des revendications précédentes, dans lequel le dispositif de réglage ou de commande (6) est conçu pour provoquer, par le au moins un vérin, une migration du point de fonctionnement (4) sur un chemin prédéfini dans le diagramme caractéristique de compresseur.

8. Moteur à combustion interne selon la revendication précédente, dans lequel le dispositif de réglage ou de commande (6) est conçu pour provoquer, par le au moins un vérin, une migration du point de fonctionnement (4) sur un chemin prédéfini dans le diagramme caractéristique de compresseur au moins approximativement parallèlement à la hauteur maximale d'aspiration (P).

9. Moteur à combustion interne selon au moins l'une des deux revendications précédentes, dans lequel le dispositif de réglage ou de commande (6) est conçu pour provoquer, par le au moins un vérin, une migration du point de fonctionnement (4) sur un chemin prédéfini à l'intérieur d'un corridor (B) qui est placé en amont de la hauteur maximale d'aspiration (P) - de préférence sur une zone de sécurité (A).

10. Moteur à combustion interne selon au moins l'une des revendications précédentes, dans lequel le dispositif de réglage ou de commande (6) est conçu pour calculer la commande du au moins un vérin en fonction d'un modèle de compresseur.

11. Moteur à combustion interne selon au moins l'une des revendications précédentes, dans lequel le dispositif de réglage ou de commande (6) est conçu pour que la commande du au moins un vérin soit effectuée en fonction d'un tableau défini.

12. Ensemble générateur avec un générateur (9) et un moteur à combustion interne couplé mécaniquement au générateur (9) selon au moins l'une des revendications précédentes.
